# EUROPEAN PATENT APPLICATION

(11) **EP 4 089 601 A1**
(43) Date of publication of application: **16.11.2022**
(21) Application number: 21173016.3
(22) Date of filing: 10.05.2021
(51) Int. Cl.: G06Q 10/06

(54) **A METHOD FOR MONITORING PERFORMANCE OF A WORKING EQUIPMENT, AND A SYSTEM FOR IMPLEMENTING THE METHOD**

(71) Applicant: Hiab AB, 164 22 Kista (SE)
(72) Inventor: GRÖNQVIST, Hanna, Helsinki (FI); KURSULA, Mikko, Lempäälä (FI)
(74) Representative: Bjerkén Hynell KB

(57) **Abstract**

A working equipment monitoring system for monitoring the performance of a working equipment (2) in a fleet of working equipment, comprising:
-a fleet of working equipment (2), such as truck mounted loader cranes, and
-a common monitoring service arrangement (4) comprising at least one processing unit (6), and configured to be connected to each working equipment (2) of the fleet via a wireless connection, and to determine and generate operation performance of the connected working equipment to be monitored by client devices (8). The at least one processing unit (6) is configured to receive criteria for favourable technical performance, and to receive from at least one working equipment (2) a data set (10) comprising data describing at least one operation instruction used for performing a working assignment, a unique identifier for the at least one working equipment (2), and a time stamp for the at least one operation instruction. The at least one processing unit (6), for each received data set related to one working equipment (2), is further configured to determine, based on the received data set, a plurality of operation performance parameters describing the technical operation aspects of the working equipment (2) in the received criteria in a predetermined time period of usage; to compare each of the plurality of determined operation performance parameters with the respective reference operation parameters of the received criteria for each predetermined time period; to determine an operation score for the working equipment (2) based on said comparisons; to adjust said operation score, comprising adding or subtracting operation points for each predetermined time period dependent on fulfilment of the received criteria for favourable performance, and to monitor the operation performance for the working equipment (2), indicated by said determined adjusted operation score.

## Description

### Technical field

The present disclosure relates to a method for monitoring the performance of a working equipment, such as loader cranes, in a fleet of working equipment, and to a system for implementing the method.

### Background

The present disclosure is within the field of equipment operation evaluation and addresses the need for objective quality control of operations involving working equipment such as loader cranes. A particular aspect of operation quality, which the disclosure is focused on, is the efficiency with which operations are executed. In industrial settings, where people operate heavy-duty machinery, it is essential to be able to quantify, without resorting to human subjectivity, the technical skills of humans operating technical equipment. Further, autonomous operation of working equipment should be evaluated in a similar manner.

Below are listed references that disclose a method for monitoring the performance of the operator/vehicle and/or working equipment in a fleet. Further, some references also disclose calculating overall operation performed based on individual score of each parameter and store the score in the memory to compare the score with other operators in the fleet and/or the working equipment in the specific geographical range.

US20170132951A1 discloses a progress monitoring system comprising to monitor performance of the driver. The document discloses about use of timestamp to note the time of measurement and trend graphic to represent the score of the driver, which is compared to a threshold. The overall score of the driver is stored in the memory to be compared with the other drivers' score.
US2015199630A1 discloses an operator performance monitoring system, wherein data from the working machine is compared with the reference data parameter. Further, an overall score of the driver is calculated from the individual parameter score. Furthermore, the individual score and the parameter score are stored in the memory to compare the score with other drivers in the fleet. In addition, the document discloses a reference group comprising a group of the working equipment of similar geographic regions. US2013231854A1 discloses a method of tracking performance of a vehicle from a plurality of vehicles. A data set is transmitted from the vehicle to a network and the network computes a driver performance ranking. The ranking is in between the group of vehicles working in the pre-determined geographical region. Further, it also discloses about the memory unit to store the executable instruction set.
US2017323244A1 discloses a method of evaluating driver performance of a fleet management system, wherein the fleet manager provides criteria to evaluate a driver performance for specific parameters. The driver performance parameter is compared with a criteria parameter and generates a driver score based on the result of the comparison. Further, reduction of the score in individual parameter score when anything is above the threshold and overall driver score is generated by the sum of the individual parameter score. The analysed data is stored in the memory and normalized by the evaluation score.

By enabling new insights, it helps you to further increase efficiency, productivity and safety, and by using presently applied monitoring system it is possible to receive real-time data about your fleet owners equipment's operation performance and condition.
The systems give access to all equipment data, fleet overviews and complete performance functionality, and predefined operational key performance index (KPI) statistics may be determined, including fleet asset details, customisable vehicle identification, latest notifications, upcoming maintenance data, operation and performance KPIs, fleet asset location, route and timeline.
These known systems enhance the productivity of fleet owner's businesses through the connected working equipment (e.g. loader cranes). The technology provides real-time insights into equipment utilisation, operation, and condition. This data may be used to actively optimise performance, safety and avoid unnecessary downtime. Web-based dashboards with clear and simple overviews provide status monitoring, service planning, and help improve the operation of each unit and operator.

Although the presently applied systems comprise numerous capabilities and options to perform complex monitoring, further improvements are considered necessary in order to meet the requirement of today and in particular in relation to sustainability, energy use, user-friendliness, and efficiency. Thus, one object of the present invention is to achieve an improved method of monitoring a working equipment of a fleet of working equipment with regard to operation efficiency and in particular in relation to power and energy operation efficiency.

### Summary

The above-mentioned object is achieved by the present invention according to the independent claims.

Preferred embodiments are set forth in the dependent claims.

According to a first aspect, the present invention relates to a method for monitoring the performance of a working equipment (2) in a fleet of working equipment. The method comprises the steps of:
A - receiving criteria for favourable technical performance, each criterion describing a technical operation aspect of the working equipment (2) in relation to a reference operation performance parameter.
B - receiving from at least one working equipment (2) in the fleet a data set (10) comprising data describing at least one operation instruction used for performing a working assignment, or a task included in the working assignment, with the working equipment, a unique identifier for the at least one working equipment, and a time stamp for the at least one operation instruction.

The method further comprises performing for each received data set (10) related to one working equipment:
C - determining, based on the received data set (10), a plurality of operation performance parameters describing the technical operation aspects of the working equipment (2) in the received criteria in a predetermined time period of usage.
D - comparing each of the plurality of determined operation performance parameters with the respective reference operation parameters of the received criteria for each predetermined time period.
E - determining an operation score for the working equipment (2) based on said comparisons.
F - adjusting said operation score, comprising adding or subtracting operation points for each predetermined time period dependent on fulfilment of the received criteria for favourable performance.
G - monitoring the operation performance for the working equipment (2), indicated by said determined adjusted operation score.

Thus, an improved solution for the calculation of the operation score is the basis of the invention. The background for the present invention is to aid in monitoring the performance of working equipment in a fleet to identify low performing equipment and/or operators, or subset (subgroup) of equipment and/or operators, from a fleet perspective. However, it may be equally interesting to identify the best performers in a fleet applying the teaching of the present invention. The overall objective is usually to improve the operation performance of the fleet as a whole, and by identifying low performers, training or service initiatives may be initiated, further, incentive programs for, or learnings from high performers may be set up to accelerate high performance of the fleet, e.g. with regard to energy and/or power operation efficiency.

According to a second aspect, the present invention relates to a working equipment monitoring system for monitoring the performance of a working equipment (2) in a fleet of working equipment. The monitoring system is configured to implement the method according to the above-mentioned first aspect of the present invention. The system comprises a fleet of working equipment (2), a common monitoring service arrangement (4) comprising at least one processing unit (6), and configured to be connected to each working equipment (2) of the fleet via a wireless connection, and to determine and generate operation performance of the connected working equipment to be monitored by client devices (8).

### Brief description of the drawings

Figure 1 is a flow diagram illustrating the method according to the present invention.
Figure 2 is a schematic block diagram illustrating the working equipment monitoring system according to the present invention.
Figure 3 is a schematic block diagram illustrating the working equipment according to one embodiment.
Figure 4 is a schematic block diagram illustrating the working equipment according to another embodiment.

### Detailed description

The method for monitoring the performance of a working equipment, and the system for performing the method, will now be described in detail with references to the appended figures. Throughout the figures the same, or similar, items have the same reference signs. Moreover, the items and the figures are not necessarily to scale, emphasis instead being placed upon illustrating the principles of the invention.

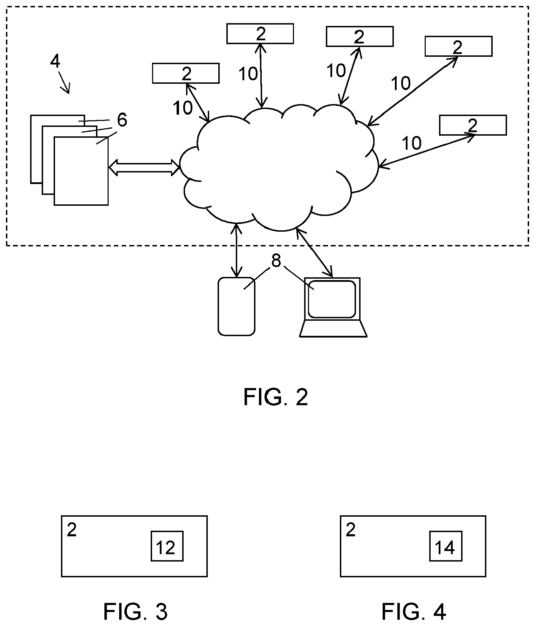

The method according to the invention is implemented in a system, which is schematically illustrated in figure 2. The system, within the dashed rectangle in figure 2, comprises a fleet of working equipment 2, such as truck mounted loader cranes, but it may also be applied to other working equipment such as hooklifts, skip loaders, tail lifts or trucks mounted to transport vehicles or stand-alone equipment such as forestry equipment, mobile cranes or excavators.
Each working equipment in the fleet is configured to be connected to a common monitoring service arrangement 4 for the fleet. The service arrangement 4 comprises at least one processing unit 6. Client devices 8, such as a mobile phone or computer used by e.g. the fleet owner, may be further connected to and benefit from the data gathered and analysed by the monitoring service arrangement. The service arrangement may be implemented as a cloud service and/or as a service distributed on several processing units 6, and the client devices 8 may use the monitoring service to monitor the operation performance of the connected working equipment. The connection between the working equipment and the monitoring service comprise a wireless connection over a network for mobile devices, which is schematically illustrated by the cloud in figure 2.

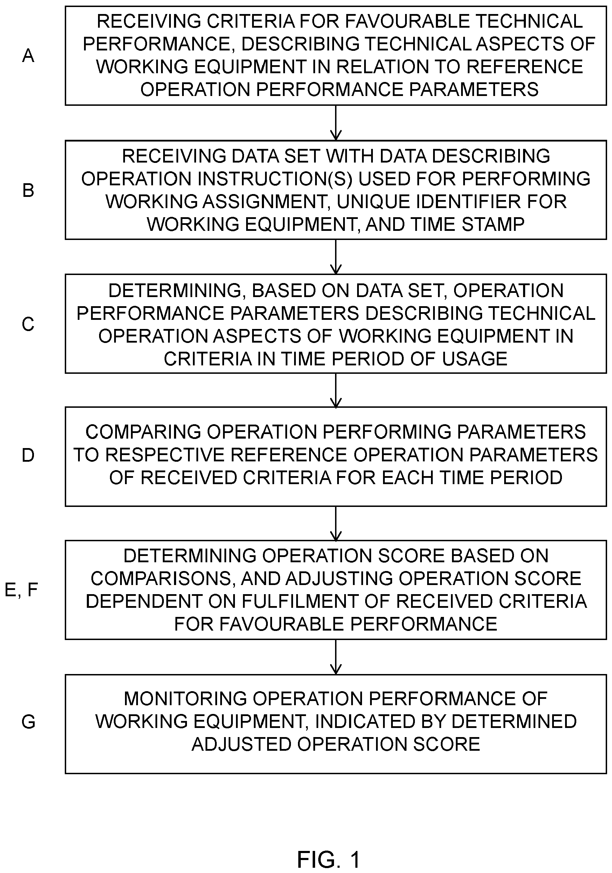

The method according to the invention will now be described in detail with references to the flow diagram of figure 1 showing the steps A-G.

Thus, the method for monitoring the performance of a working equipment 2 in a fleet of working equipment comprises, in step A, receiving criteria for favourable technical performance, each criterion describing a technical operation aspect of the working equipment 2 in relation to a reference operation performance parameter.

The monitoring service arrangement receives a plurality of criteria for favourable performance. This may be tailored to the specific fleet, or set up as a general set of criteria independent of which fleet the working equipment belongs to. The criteria may hence be received as settings from a fleet owner or as general settings for the monitoring service governing the mechanism of the monitoring service as a whole. As an example, the criteria may be set up to monitor the efficiency in the operation of the working equipment. Each criterion for favourable performance may be set up to describe an operation aspect of the working equipment in relation to a reference performance parameter.

There are different alternatives for how to set up and update the reference performance parameters of the fleet. The reference performance parameters may be calculated and updated based on the working equipment of the fleet. As an alternative, the reference group may be a group comprising the working equipment of the fleet in addition to other working equipment from other fleets of working equipment. As an example, the reference group may be a group of equipment used for the same type of working assignments, or operated within the same geographical area. Yet another alternative is to use reference performance parameters defined as constants when setting up the monitoring system.

In case the reference performance parameters are continuously updated based on the performance of a reference group as earlier explained, the reference performance parameters may be calculated as a mean or median, or another type of defined statistical measure based on performance data collected during for example a rolling monthly time period. Other time periods than a month may of course also be used in the same manner.

The method further comprises receiving, in step B, from at least one working equipment 2 in the fleet, a data set 10 comprising data describing at least one operation instruction used for performing a working assignment, or a task included in the working assignment, with the working equipment, a unique identifier for the at least one working equipment, and a time stamp for the at least one operation instruction.

The operation instructions used for performing a working assignment with the working equipment may be generated in response to receiving input from an operator using a manoeuvring unit of the working equipment. Examples of operation instructions include instructions for moving a particular component of the working equipment, such as a first or a second boom of a crane.
As an alternative, the operation instructions of the working equipment are generated by an autonomous operation system of the working equipment.
In either case, it is the operation performance of the working equipment that is monitored. In the case where the working instructions are generated in response to receiving input from an operator, the identity of the operator may be mapped to the working equipment, using knowledge about which operator is managing a particular working equipment at a particular time period. As a further alternative the identity of the operator may further form part of the data set received from the working equipment.

The data describing the operation instructions used for performing the working assignment or task data may be "raw data" representing signals handled as operation commands by the control system, which may be based on input from the operator through a user interface or automatically generated by an autonomous operation system. The data set may further comprise various measured values from various sensors of the working equipment, the measured values may further describe the operation instructions and/or the effect the operation instructions of the working equipment 2. These measured values comprise e.g. pressures of hydraulic cylinders, hydraulic flow, force exerted by various parts of the working equipment, speed of movement, etc. As an alternative to receiving the "raw data" from the working equipment, processed data may be received comprising data representing the actual operation commands or operation instructions applied and/or the operation performance or the effect on the crane based on the operation commands or operation instructions applied.

The method further comprises performing, for each received data set 10 related to one working equipment, steps C-G:
Step C: Determining, based on the received data set 10, a plurality of operation performance parameters describing the technical operation aspects of the working equipment 2 in the received criteria in a predetermined time period of usage and for each received unique identifier of working equipment in the fleet.

The predetermined time period of usage may, as an example, be an hour, or a larger or smaller period of time, and may possibly be determined by the fleet owner, and then being a tuneable parameter of the system. The predetermined time period of usage may be set specifically for the fleet and tailored to its particular working circumstances or set for the whole operation monitoring system. The predetermined time period of usage sets the granularity of the operation monitoring as it defines the time period during which the operation performance parameters are summarized and eventually evaluated compared to the criteria for favourable performance.

According to one embodiment, the plurality of operation performance parameters comprises at least two of the following, describing technical operation aspects for:
- the time needed to complete a working assignment, or a task included in the working assignment;
- the power and/or energy, e.g. with regard to the quantity of greenhouse emissions, used to complete a working assignment, or a task included in the working assignment;
- how many operation instructions that are used to complete the assignment or task;
- how many, if any, and which operation instructions that are concurrently activated;
- idling time when power to the equipment is turned on but when the working equipment 2 is not actively used during the assignment or task, and
- how many alerts the working equipment has generated to warn about improper operation during a working assignment, such as if the overload protection limit of the working equipment has been approached or if the operation is not efficient from an energy perspective.

The last operation performance parameter may be directed to a particular type of alert that the working equipment has generated. This could be alerts related to overload protection, alerts related to stability, i.e. risk of tipping for the crane installation during the operation, or a group of alerts such as alerts related to safety which would include both overload protection alerts and alerts related to stability. As an example, when it comes to alerts related to safety it is likely that the reference operation performance parameter defining a favourable condition should be set to 0.

Another possible operation performance parameter could be the structural strain or fatigue that the lift operation causes to the working equipment, e.g. the crane. Using this parameter is advantageous as it may already be available as it is calculated by crane controller software in some presently used cranes. The strain parameters may be applied in order to optimize the total efficiency over the crane lifetime. In the case that an operation performance parameter, such as the structural strain or fatigue has already been calculated or pre-processed by the crane controller, before it is sent to the monitoring service arrangement 4 for the fleet, the step of determining (step C) may comprise identifying or verifying that these pieces of data are in the received data set.

Step D - Comparing each of the plurality of determined operation performance parameters with the respective reference operation parameters of the received criteria for favourable performance for each predetermined time period and received unique identifier of working equipment.

Step E: Determining an operation score for the working equipment 2 based on said comparisons.
In this step the results of the comparisons in step D are combined in order to determine one operation score for the identified working equipment during a specific time period. This may be achieved by adding together values representing the results of each of the comparisons.

Step F: Adjusting said operation score, comprising adding or subtracting operation points for each predetermined time period dependent on fulfilment of the received criteria for favourable performance.

The adjustments made in step F is made to reflect how well the determined operation performance parameters, seen as a whole, correspond to the respective reference operation parameters of the received criteria for favourable performance, also seen as a whole.

According to one embodiment, an operation score is determined for each of the working equipment based on the comparison by:
- Adding a first predetermined amount of operation points for each predetermined time period during which at least one of the received criteria for favourable performance is fulfilled.
- Removing a second predetermined amount of operation points for each predetermined time period during which none of the received criteria for favourable performance is fulfilled.

The first and second amounts of operation points may be set to be equal to each other, but selecting different amounts of operation points may further fine-tune the evaluation of the operation performance.

According to another variation of the invention, the operation score is calculated based on if a number of the received criteria for favourable performance are fulfilled. This number of criteria being larger than one but smaller than the total number of criteria. If, as an example, three criteria is received then the score may be dependent on if two of the three criteria is fulfilled. This will give the advantage of having more flexibility in determining what is favourable operation efficiency which is a good basis for achieving a Gaussian distribution in the scoring across the fleet.

The total score for a working equipment during a period of analysis, such as a day or a week, may then preferably be normalized with the total amount of predetermined time periods included in the comparison for each working equipment. The determined and normalized operation scores of each of the working equipment in the fleet may then be stored by means of which the operation performance can be monitored relative to the other equipment of the fleet.

Further processing of the determined and normalized score may also be possible, for example, transferring the score to a percentage with reference to the range of operation performance scores determined for the working equipment within the fleet.

Step G: Monitoring the operation performance for the working equipment 2, indicated by said determined adjusted operation score.
The determined adjusted operation scores are stored and are available via client devices.

The method according to the invention may further optionally comprise determining the operation score for each working equipment in the fleet with a predetermined frequency. The method optionally also comprises storing the time history of the determined operation score, and/or one or more determined alternative operation score(s), in the form of a performance history of each of the working equipment in the fleet, by means of which the operation performance trends can be monitored relative to the other equipment of the fleet.

The method according to the invention may further comprise additional steps for comparing the determined operation scores to predetermined thresholds or comparing a relative ranking of the working equipment within a fleet to the other working equipment of the fleet and generating an event of low or high operation performance based on the results of the comparison. The event may in its turn trigger an alert at a client device, such as sending an email or another type of text message to the fleet owner, and/or a visual and/or audial alert. As an alternative, or in addition to, the results of the comparisons of the determined operation scores within a fleet or in relation to a reference group may be compiled in an operation performance report, and/or displayed in an interactive performance dashboard in a web portal.

Below is an example of how the method according to the invention may be implemented for efficiency scoring of a crane operated by a crane operator. The efficiency scoring is an example of an operation performance scoring.
The implemented method allows for a definition of operational efficiency that generates a Gaussian-like distribution of the efficiency in a fleet of working equipment such as cranes. A Gaussian like distribution should be target of an implemented method of the invention, as this is expected from performance of working equipment resulting from heterogeneous operations when a sufficiently high number of observations have been recorded. Efficiency in this respect plays an integral role in safe, speedy and eco-efficient operations and should reflect these points.

There are three metrics, or operation performance parameters, going into the efficiency score in this particular implementation (However, the other operation performance parameters explained above could be used in addition or as alternatives): simultaneous use of levers, time per lift, and overall number of lever activations.
Further alternatives of operation performance parameters, going into the efficiency score may be:
1) the power needed to complete the movement based on lever commands
2) the strain exerted on the structure of the equipment following the lever activations
3) the emissions resulting from the lift based on energy use

For each of the three mentioned metrics (i.e. simultaneous use of levers, time per lift, and overall number of lever activations), their quality is compared to the overall fleet average for a rolling window of 30 days. For each metric the question of whether the operation has been better than average is asked, forming three conditions or criteria (other criteria based on other operation performance parameters could be used in addition or as an alternative):
c₁ = were there more levers used simultaneously than on average in this fleet?
c₂ = were the lift cycles done in a speedier manner than the fleet average?
c₃ = was the overall number of lever activations less than the fleet average?

Efficiency score points are defined through the following logical functional q:
p → q (material conditional)
where p = c₁₂ ∨ c₁₃ ∨ c₂₃ (logical disjunction)
and cᵢⱼ = cᵢ ∧ cⱼ, cₐ ∈ [c₁, c₂, c₃] (logical conjunction)

Hourly conditions with baseline of fleet's rolling monthly average score: For each hour of operations, if p is True (False) then a point is added to (subtracted from) q. The sum of those hours compared, normalized to the length of the working day gives the final score for a given crane on a given day. As the scores are compared to the fleet average, any given fleet always has room to grow, evolve and improve.

The efficiency score is hence dependent on if a subset of the set of criteria or conditions are fulfilled. Like explained in the above implementation: if at least two of the three conditions or criteria is fulfilled. This offers an advantage in that the definition of the operational performance, in this case the operational efficiency, is broad enough to generate a Gaussian-like distribution in the performance of a fleet.

The scores may further be transformed into a percentage for the operation efficiency related to the fleet efficiency performance.

The efficiency score developed has the advantage of providing an objective evaluation of operational efficiency. Eliminating human subjectivity in the evaluation process is the first step toward building an industry-wide standard competence score that has multiple advantages:
- Crane operators have an objective evaluation of their performance.
- Fleet managers get both objective overviews of their fleets and detailed views of operators within the fleet.

Both of these stakeholders benefit from the efficiency score in the sense that:
- Operators can get globally and industry-wide accepted scores on performance and get training targeted to their specific needs as observed through the efficiency score.
- Fleet managers can train their employees in the most targeted and therefore cost-efficient way possible when the efficiency score shows needs for further training.

A further advantage of the method according to the present invention is that presently used performance evaluation schemes may be applied if updated to handle the scores as determined according to the method defined herein. The method according to the present invention enables a Gaussian distribution of operation performance such as the efficiency of the operation instructions, across a fleet.

The present disclosure also relates to a working equipment monitoring system for monitoring the performance of a working equipment 2 in a fleet of working equipment, i.e. a system of implementing the method described in detail above.

The system will now be described with references to figure 2, and it is also referred to the above description of the method.

The system comprises a fleet of working equipment 2, such as truck mounted loader cranes, hooklifts, skip loaders, tail lifts or trucks mounted to transport vehicles or stand-alone equipment such as forestry equipment, mobile cranes or excavators.
In addition, the system comprises a common monitoring service arrangement 4 comprising at least one processing unit 6, and configured to be connected to each working equipment 2 of the fleet via a wireless connection. The at least one processing unit 6 is also configured to determine and generate operation performance of the connected working equipment to be monitored by client devices 8, such as a mobile phone or a computer.

The at least one processing unit 6 is configured to receive criteria for favourable technical performance, each criterion describing a technical operation aspect of the working equipment 2 in relation to a reference operation performance parameter. This is discussed in detail in relation to the description of the method.

The at least one processing unit 6 is also configured to receive from at least one working equipment 2 in the fleet a data set 10 comprising data describing at least one operation instruction used for performing a working assignment, or a task included in the working assignment, with the working equipment 2, a unique identifier for the at least one working equipment 2, and a time stamp for the at least one operation instruction. Further details of the data set are discussed above.

The at least one processing unit 6, for each received data set related to one working equipment 2, is further configured to determine, based on the received data set, a plurality of operation performance parameters describing the technical operation aspects of the working equipment 2 in the received criteria in a predetermined time period of usage. The processing unit 6 is then arranged to compare each of the plurality of determined operation performance parameters with the respective reference operation parameters of the received criteria for each predetermined time period, and to determine an operation score for the working equipment 2 based on the comparisons. The operation score is then adjusted by adding or subtracting operation points for each predetermined time period dependent on fulfilment of the received criteria for favourable performance.

Finally, the service arrangement is then configured to monitor the operation performance for the working equipment 2, which is indicated by the determined adjusted operation score.

According to one embodiment, the adjustment of the operation score comprises adding a first predetermined amount of operation points for each predetermined time period during which at least one of the received criteria for favourable performance is fulfilled, and subtracting a second predetermined amount for each predetermined time period during which none of the received criteria for favourable performance is fulfilled.

In a further embodiment, the plurality of operation performance parameters comprises at least two of the following, describing technical operation aspects for:
- the time needed to complete a working assignment, or a task included in the working assignment;
- the power and/or energy used to complete a working assignment, or a task included in the working assignment;
- how many operation instructions that are used to complete the assignment or task;
- how many, if any, and which operation instructions that are concurrently activated;
- idling time when power to the equipment is turned on but when the working equipment is not actively used during the assignment or task, and
- how many alerts the working equipment has generated to warn about improper operation during a working assignment, such as if the overload protection limit of the working equipment has been approached or if the operation is not efficient from an energy perspective. The last parameter is further discussed above, where the method is described.

In one further embodiment, the processing unit 6 is configured to determine the operation score for each working equipment in the fleet with a predetermined frequency and to store the time history of the determined operation score in the form of a performance history of each of the working equipment in the fleet. This is achieved by means of the at least one processing unit 6, of which the operation performance trends can be monitored relative to the other equipment of the fleet.

With references to the simplified block diagram shown in figure 3, in another embodiment, the working equipment 2 comprises a manoeuvring unit 12 configured to receive input by an operator and to generate operation instructions of the working equipment used for performing a working assignment with the working equipment.

And, with references to the simplified block diagram shown in figure 4, in another embodiment, the working equipment 2 comprises an autonomous operation system 14 configured to generate operation instructions used for performing a working assignment with the working equipment. Examples of operation instructions would then include to extend or retract a telescopic boom, to raise or lower a particular boom, to open or close a tool, to rotate a part of the working equipment etc. in a specified manner, to a particular target position or for a particular time period.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method for monitoring the performance of a working equipment (2) in a fleet of working equipment, comprising the steps of:
A - receiving criteria for favourable technical performance, each criterion describing a technical operation aspect of the working equipment (2) in relation to a reference operation performance parameter,
B - receiving from at least one working equipment (2) in the fleet a data set (10) comprising data describing at least one operation instruction used for performing a working assignment, or a task included in the working assignment, with the working equipment, a unique identifier for the at least one working equipment, and a time stamp for the at least one operation instruction,
**characterized in that** the method further comprises performing for each received data set (10) related to one working equipment:
C - determining, based on the received data set (10), a plurality of operation performance parameters describing the technical operation aspects of the working equipment (2) in the received criteria in a predetermined time period of usage;
D - comparing each of the plurality of determined operation performance parameters with the respective reference operation parameters of the received criteria for each predetermined time period;
E - determining an operation score for the working equipment (2) based on said comparisons;
F - adjusting said operation score, comprising adding or subtracting operation points for each predetermined time period dependent on fulfilment of the received criteria for favourable performance, and
G - monitoring the operation performance for the working equipment (2), indicated by said determined adjusted operation score.

2. The method according to claim 1, wherein adjusting the operation score comprises adding a first predetermined amount of operation points for each predetermined time period during which at least one of the received criteria for favourable performance is fulfilled, and subtracting a second predetermined amount for each predetermined time period during which none of the received criteria for favourable performance is fulfilled.

3. The method according to claim 1 or 2, wherein adjusting the operation score comprises normalizing the score with the total amount of predetermined time periods included in the comparison for each working equipment.

4. The method according to any of claims 1-3, wherein the plurality of operation performance parameters comprises at least two of the following, describing technical operation aspects for:
- the time needed to complete a working assignment, or a task included in the working assignment;
- how many operation instructions that are used to complete the assignment or task;
- the power and/or energy used to complete a working assignment, or a task included in the working assignment;
- how many, if any, and which operation instructions that are concurrently activated, and
- idling time when power to the equipment is turned on but when the working equipment (2) is not actively used during the assignment or task;
- how many alerts the working equipment has generated to warn about improper operation during a working assignment.

5. The method according to any of claims 1-4, comprising determining the operation score for each working equipment (2) in the fleet with a predetermined frequency and storing the time history of the determined operation score in the form of a performance history of each of the working equipment (2) in the fleet, by means of which the operation performance trends can be monitored relative to the other equipment of the fleet.

6. Method according to any of claims 1-5, wherein the method further comprises calculating reference operation performance parameters based on received data sets from the working equipment (2) of the fleet, and/or from working equipment (2) of other fleets.

7. Method according to any of claims 1-6, wherein the method further comprises calculating reference operation performance parameters based on received data sets from working equipment (2) used for the same type of working assignments, and/or operated within the same geographical area.

8. Method according to any of claims 1-7, wherein the operation instructions used for performing a working assignment with the working equipment (2) are generated by an operator of the working equipment and input to the working equipment by a manoeuvring unit (12).

9. Method according to any of claims 1-7, wherein the operation instructions used for performing a working assignment with the working equipment (2) are generated by an autonomous operation system (14) of the working equipment.

10. A working equipment monitoring system for monitoring the performance of a working equipment (2) in a fleet of working equipment, comprising:
- a fleet of working equipment (2), such as truck mounted loader cranes, hooklifts, skip loaders, tail lifts or trucks mounted to transport vehicles or stand-alone equipment such as forestry equipment, mobile cranes or excavators, and
- a common monitoring service arrangement (4) comprising at least one processing unit (6), and configured to be connected to each working equipment (2) of the fleet via a wireless connection, and to determine and generate operation performance of the connected working equipment to be monitored by client devices (8), such as a mobile phone or a computer,
the at least one processing unit (6) is configured to receive criteria for favourable technical performance, each criterion describing a technical operation aspect of the working equipment (2) in relation to a reference operation performance parameter, and to receive from at least one working equipment (2) in the fleet a data set (10) comprising data describing at least one operation instruction used for performing a working assignment, or a task included in the working assignment, with the working equipment (2), a unique identifier for the at least one working equipment (2), and a time stamp for the at least one operation instruction,
**characterized in that** the at least one processing unit (6), for each received data set related to one working equipment (2), is further configured to determine, based on the received data set, a plurality of operation performance parameters describing the technical operation aspects of the working equipment (2) in the received criteria in a predetermined time period of usage; to compare each of the plurality of determined operation performance parameters with the respective reference operation parameters of the received criteria for each predetermined time period; to determine an operation score for the working equipment (2) based on said comparisons; to adjust said operation score, comprising adding or subtracting operation points for each predetermined time period dependent on fulfilment of the received criteria for favourable performance, and to monitor the operation performance for the working equipment (2), indicated by said determined adjusted operation score.

11. The system according to claim 10, wherein adjusting the operation score comprises adding a first predetermined amount of operation points for each predetermined time period during which at least one of the received criteria for favourable performance is fulfilled, and subtracting a second predetermined amount for each predetermined time period during which none of the received criteria for favourable performance is fulfilled.

12. The system according to claim 10 or 11, wherein the plurality of operation performance parameters comprises at least two of the following, describing technical operation aspects for:
- the time needed to complete a working assignment, or a task included in the working assignment;
- how many operation instructions that are used to complete the assignment or task;
- the power and/or energy used to complete a working assignment, or a task included in the working assignment;
- how many, if any, and which operation instructions that are concurrently activated;
- idling time when power to the equipment is turned on but when the working equipment is not actively used during the assignment or task, and
- how many alerts the working equipment has generated to warn about improper operation during a working assignment.

13. The system according to any of claims 10-12, wherein the processing unit (6) is configured to determine the operation score for each working equipment in the fleet with a predetermined frequency and to store the time history of the determined operation score in the form of a performance history of each of the working equipment in the fleet, by means of which the operation performance trends can be monitored relative to the other equipment of the fleet.

14. The system according to any of claims 10-13, wherein the working equipment (2) comprises a manoeuvring unit (12) configured to receive input by an operator and to generate operation instructions of the working equipment used for performing a working assignment with the working equipment.

15. The system according to any of claims 10-13, wherein the working equipment (2) comprises an autonomous operation system (14) configured to generate operation instructions used for performing a working assignment with the working equipment.
